(19) Europäisches Patentamt
European Patent Office
Office européen des brevets

(11) **EP 3 062 542 B1**

(12) **EUROPEAN PATENT SPECIFICATION**

(45) Date of publication and mention of the grant of the patent:
**28.07.2021 Bulletin 2021/30**

(51) Int Cl.:
*H04W 4/20* (2018.01)  *H04W 4/06* (2009.01)
*H04W 48/16* (2009.01)  *H04W 4/70* (2018.01)

(21) Application number: **14856725.8**

(22) Date of filing: **22.10.2014**

(86) International application number:
**PCT/KR2014/009964**

(87) International publication number:
**WO 2015/060646 (30.04.2015 Gazette 2015/17)**

(54) **METHOD FOR TRANSMITTING BROADCAST CHANNEL IN WIRELESS ACCESS SYSTEM SUPPORTING MACHINE-TYPE COMMUNICATION, AND APPARATUS SUPPORTING THE SAME**

VERFAHREN ZUR ÜBERTRAGUNG VON BROADCASTKANÄLEN IN EINEM DRAHTLOSEN ZUGANGSSYSTEM ZUR UNTERSTÜTZUNG EINER MASCHINENKOMMUNIKATION UND VORRICHTUNG DAMIT

PROCÉDÉ POUR TRANSMETTRE UN CANAL DE DIFFUSION DANS UN SYSTÈME D'ACCÈS SANS FIL PRENANT EN CHARGE UNE COMMUNICATION DE TYPE MACHINE, ET APPAREIL LE PRENANT EN CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2013 US 201361894377 P**

(43) Date of publication of application:
**31.08.2016 Bulletin 2016/35**

(73) Proprietor: **LG ELECTRONICS INC.**
**Yeongdeungpo-gu**
**Seoul 07336 (KR)**

(72) Inventors:
• **KIM, Bonghoe**
  **Seoul 137-893 (KR)**
• **SEO, Dongyoun**
  **Seoul 137-893 (KR)**

• **YANG, Suckchel**
  **Seoul 137-893 (KR)**
• **YOU, Hyangsun**
  **Seoul 137-893 (KR)**
• **YI, Yunjung**
  **Seoul 137-893 (KR)**

(74) Representative: **Plasseraud IP**
**66, rue de la Chaussée d'Antin**
**75440 Paris Cedex 09 (FR)**

(56) References cited:
**WO-A1-2013/115571**   **GB-A- 2 498 571**
**KR-A- 20130 040 699**   **KR-A- 20130 079 104**
**US-A1- 2013 094 457**   **US-A1- 2013 114 521**
**US-A1- 2013 250 878**   **US-A1- 2013 250 878**

• **None**

## Description

[Technical Field]

The present invention relates to a wireless access system supporting Machine Type Communication (MTC) and, more particularly, to a method for repeatedly transmitting a Physical Broadcast Channel (PBCH) for MTC and an apparatus supporting the same.

[Background Art]

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system. The document US 2013/250878 discloses a method for supporting a Machine-type Communication User Equipment.

[Disclosure]

[Technical Problem]

An object of the present invention devised to solve the problem lies in a method of configuring a PBCH for an MTC user equipment (UE).

Another object of the present invention is to provide a method for repeatedly transmitting information over a PBCH for an MTC UE.

Another object of the present invention is to provide an apparatus supporting the methods.

It will be appreciated by persons skilled in the art that the objects that could be achieved with the present invention are not limited to what has been particularly described hereinabove and the above and other objects that the present invention could achieve will be more clearly understood from the following detailed description.

[Technical Solution]

The present invention relates to a wireless access system supporting Machine Type Communication (MTC) and, more particularly, provides a method for repeatedly transmitting a Physical Broadcast Channel (PBCH) for MTC and an apparatus supporting the same.

The object of the present invention can be achieved by providing a method according to claim 1 and an evolved Node B according to claim 5. Further embodiments are described in dependent claims 2 to 4, and 6 to 8. There is also provided a method for transmitting a physical broadcast channel (PBCH) in a wireless access system supporting machine type communication (MTC), the method including broadcasting a legacy PBCH through a legacy transmission region, and broadcasting an MTC PBCH through an MTC transmission region. The legacy transmission region may be configured by six resource blocks (RBs) at a center frequency of a second slot of a first subframe in every frame, and the MTC transmission region may be configured in a subframe other than the first subframe in every frame.

In another aspect of the present invention, provided herein is an evolved Node B, eNB, for transmitting a physical broadcast channel (PBCH) in a wireless access system supporting machine type communication (MTC), the eNB including a transmitter, and a processor for supporting transmission of the PBCH. The processor may be configured to control the transmitter to broadcast a legacy PBCH through a legacy transmission region and to broadcast an MTC PBCH through an MTC transmission region, wherein the legacy transmission region may be configured by six resource blocks (RBs) at a center frequency of a second slot of a first subframe in every frame, and the MTC transmission region may be configured in a subframe other than the first subframe in every frame.

The legacy PBCH and the MTC PBCH may contain the same system information, wherein the legacy PBCH may be a first PBCH encoded bit block, and the MTC PBCH may be a second PBCH encoded bit block.

Alternatively, the legacy PBCH and the MTC PBCH may contain the same system information, wherein the legacy PBCH and the MTC PBCH may be identical PBCH encoded bit blocks.

Herein, the MTC transmission region may be configured in consideration of a cell reference signal (CRS), a channel status information-reference signal (CSI-RS), a physical downlink control channel (PDCCH), a physical HARQ indicator channel (PHICH) and/or a physical control format indicator channel (PCFICH) transmitted in a corresponding sub frame.

In addition, when a size of the MTC transmission region is less than 240 resource elements, a part of the MTC PBCH corresponding to the size of the MTC transmission region may be transmitted and a remaining part of the MTC PBCH may not be transmitted.

Alternatively, when a size of the MTC transmission region is greater than or equal to 240 resource elements, an entirety of the MTC PBCH may be transmitted, and the MTC PBCH may be retransmitted in a remaining part of the MTC transmission region in a cycling manner.

Alternatively, when a size of the MTC transmission region is greater than or equal to 240 resource elements, an entirety of the MTC PBCH may be transmitted, and another MTC PBCH may be transmitted in a remaining part of the MTC transmission region.

The aforementioned aspects of the present invention are merely a part of preferred embodiments of the present invention. Those skilled in the art will derive and understand various embodiments reflecting the technical features of the present invention from the following detailed description of the present invention.

[Advantageous Effects]

According to embodiments of the present invention, the present invention has the following effects.

First, a PBCH may be reliably transmitted to MTC UEs located in a poor environment.

Second, the system information for an MTC UE may be effectively transmitted by defining a new MTC PBCH without affecting the legacy UE.

It will be appreciated by persons skilled in the art that that the effects that can be achieved through the embodiments of the present invention are not limited to those described above and other advantages of the present invention will be more clearly understood from the following detailed description. That is, unintended effects according to practice of the present invention may be derived from the embodiments of the present invention by those skilled in the art.

[Description of Drawings]

The accompanying drawings, which are included to provide a further understanding of the invention, illustrate embodiments of the invention and together with the description serve to explain the principle of the invention. In the drawings:

FIG. 1 illustrates physical channels and a general signal transmission method using the physical channels, which may be used in embodiments of the present invention;
FIG. 2 illustrates radio frame structures used in embodiments of the present invention;
FIG. 3 illustrates a structure of a DownLink (DL) resource grid for the duration of one DL slot, which may be used in embodiments of the present invention;
FIG. 4 illustrates a structure of an UpLink (UL) subframe, which may be used in embodiments of the present invention;
FIG. 5 illustrates a structure of a DL subframe, which may be used in embodiments of the present invention;
FIG. 6 illustrates a cross carrier-scheduled subframe structure in the LTE-A system, which is used in embodiments of the present invention;
FIG. 7 is a diagram showing an example of an initial access procedure used in an LTE/LTE-A system;
FIG. 8 is a diagram showing one method for transmitting a broadcast channel signal;
FIG. 9 is a diagram illustrating one of methods for transmitting and receiving a PBCH in a case where an MTC UE and a legacy UE coexist; and
FIG. 10 is a diagram illustrating apparatuses for implementing the method is illustrated in FIGs. 1 to 9.

[Best Mode]

Embodiments of the present invention described in detail below relate to a wireless access system supporting machine type communication (MTC) and, more particularly, provide a method for repeatedly transmitting a physical broadcast channel (PBCH) for MTC and apparatuses supporting the same.

The embodiments of the present invention described below are combinations of elements and features of the present invention in specific forms. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions or elements of any one embodiment may be included in another embodiment and may be replaced with corresponding constructions or features of another embodiment.

In the description of the attached drawings, a detailed description of known procedures or steps of the present invention will be avoided lest it should obscure the subject matter of the present invention. In addition, procedures or steps that could be understood to those skilled in the art will not be described either.

In the embodiments of the present invention, a description is mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an evolved Node B (eNode B or eNB), an Advanced Base Station (ABS), an access point, etc.

In the embodiments of the present invention, the term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a UE may serve as a transmitter and a BS may serve as a receiver, on an UpLink (UL). Likewise, the UE may serve as a receiver and the BS may serve as a transmitter, on a DL.

The embodiments of the present invention may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, and a 3GPP2 system. In particular, the embodiments of the present invention may be supported by the standard specifications, 3GPP TS 36.211, 3GPP TS 36.212, 3GPP TS 36.213, and 3GPP TS 36.321. That is, the steps or parts, which are not described to clearly reveal the technical idea of the present invention, in the embodiments of the present invention may be explained by the above standard specifications. All terms used in the embodiments of the present invention may be explained by the standard specifications.

Reference will now be made in detail to the preferred embodiments of the present invention with reference to the accompanying drawings. The detailed description, which will be given below with reference to the accompanying drawings, is intended to explain exemplary embodiments of the present invention, rather than to show the only embodiments that can be implemented according to the invention.

The following detailed description includes specific terms in order to provide a thorough understanding of the present invention. However, it will be apparent to those skilled in the art that the specific terms may be replaced with other terms without departing the technical scope of the present invention as defined by the appended claims.

For example, the term used in embodiments of the present invention, 'synchronization signal' is interchangeable with a synchronization sequence, a training symbol or a synchronization preamble in the same meaning.

The embodiments of the present invention can be applied to various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

CDMA may be implemented as a radio technology such as Universal Terrestrial Radio Access (UTRA) or CDMA2000. TDMA may be implemented as a radio technology such as Global System for Mobile communications (GSM)/General packet Radio Service (GPRS)/Enhanced Data Rates for GSM Evolution (EDGE). OFDMA maybe implemented as a radio technology such as IEEE 802.11 (Wi-Fi), IEEE 802.16 (WiMAX), IEEE 802.20, Evolved UTRA (E-UTRA), etc.

UTRA is a part of Universal Mobile Telecommunications System (UMTS). 3GPP LTE is a part of Evolved UMTS (E-UMTS) using E-UTRA, adopting OFDMA for DL and SC-FDMA for UL. LTE-Advanced (LTE-A) is an evolution of 3GPP LTE. While the embodiments of the present invention are described in the context of a 3GPP LTE/LTE-A system in order to clarify the technical features of the present invention, the present invention is also applicable to an IEEE 802.16e/m system, etc.

## 1. 3GPP LTE/LTE-A System

In a wireless access system, a UE receives information from an eNB on a DL and transmits information to the eNB on a UL. The information transmitted and received between the UE and the eNB includes general data information and various types of control information. There are many physical channels according to the types/usages of information transmitted and received between the eNB and the UE.

**1.1 System Overview**

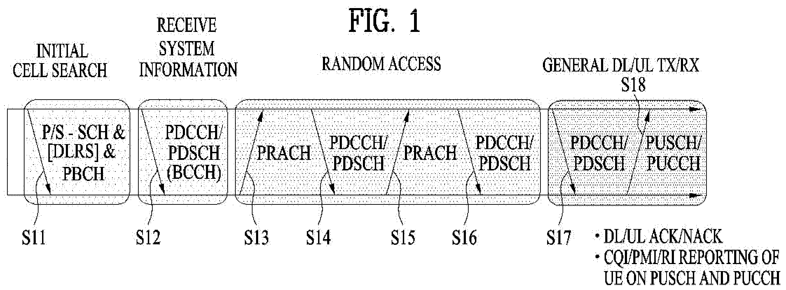

FIG. 1 illustrates physical channels and a general method using the physical channels, which may be used in embodiments of the present invention.

When a UE is powered on or enters a new cell, the UE performs initial cell search (S11). The initial cell search involves acquisition of synchronization to an eNB. Specifically, the UE synchronizes its timing to the eNB and acquires information such as a cell Identifier (ID) by receiving a Primary Synchronization Channel (P-SCH) and a Secondary Synchronization Channel (S-SCH) from the eNB.

Then the UE may acquire information broadcast in the cell by receiving a Physical Broadcast Channel (PBCH) from the eNB.

During the initial cell search, the UE may monitor a DL channel state by receiving a Downlink Reference Signal (DL RS).

After the initial cell search, the UE may acquire more detailed system information by receiving a Physical Downlink Control Channel (PDCCH) and receiving a Physical Downlink Shared Channel (PDSCH) based on information of the PDCCH (S12).

To complete connection to the eNB, the UE may perform a random access procedure with the eNB (S13 to S16). In the random access procedure, the UE may transmit a preamble on a Physical Random Access Channel (PRACH) (S13) and may receive a PDCCH and a PDSCH associated with the PDCCH (S14). In the case of contention-based random access, the UE may additionally perform a contention resolution procedure including transmission of an additional PRACH (S15) and reception of a PDCCH signal and a PDSCH signal corresponding to the PDCCH signal (S16).

After the above procedure, the UE may receive a PDCCH and/or a PDSCH from the eNB (S17) and transmit a Physical Uplink Shared Channel (PUSCH) and/or a Physical Uplink Control Channel (PUCCH) to the eNB (S18), in a general UL/DL signal transmission procedure.

Control information that the UE transmits to the eNB is generically called Uplink Control Information (UCI). The UCI includes a Hybrid Automatic Repeat and reQuest Acknowledgement/Negative Acknowledgement (HARQ-ACK/NACK), a Scheduling Request (SR), a Channel Quality Indicator (CQI), a Precoding Matrix Index (PMI), a Rank Indicator (RI), etc.

In the LTE system, UCI is generally transmitted on a PUCCH periodically. However, if control information and traffic data should be transmitted simultaneously, the control information and traffic data may be transmitted on a PUSCH. In addition, the UCI may be transmitted aperiodically on the PUSCH, upon receipt of a request/command from a network.

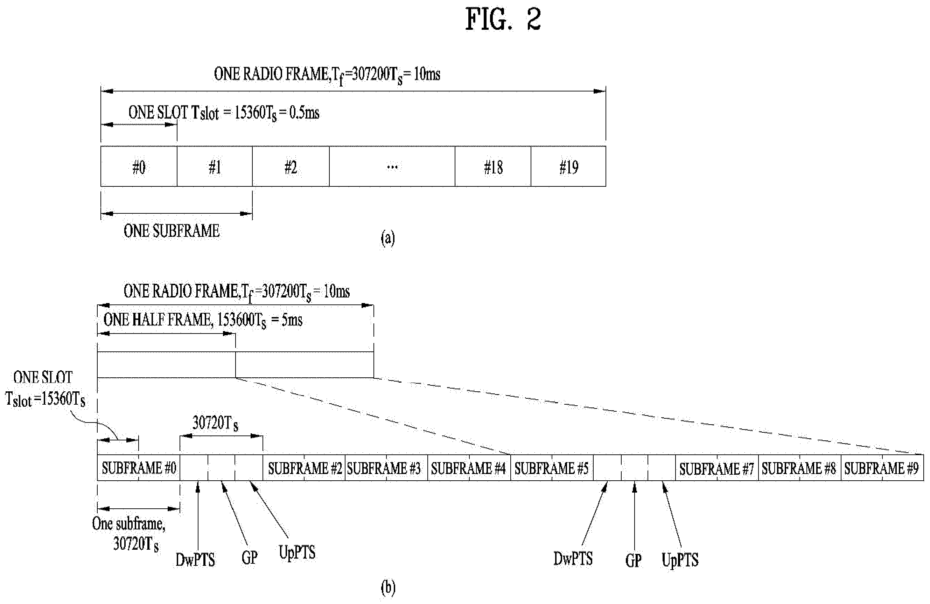

FIG. 2 illustrates exemplary radio frame structures used in embodiments of the present invention.

FIG. 2(a) illustrates frame structure type 1. Frame structure type 1 is applicable to both a full Frequency Division Duplex (FDD) system and a half FDD system.

One radio frame is 10ms ($T_f=307200 \cdot T_s$) long, including equal-sized 20 slots indexed from 0 to 19. Each slot is 0.5ms ($T_{slot}=15360 \cdot T_s$) long. One subframe includes two successive slots. An $i^{th}$ subframe includes $2i^{th}$ and $(2i+1)^{th}$ slots. That is, a radio frame includes 10 subframes. A time required for transmitting one subframe is defined as a Transmission Time Interval (TTI). Ts is a sampling time given as $T_s=1/(15kHz \times 2048)=3.2552 \times 10^{-8}$ (about 33ns). One slot includes a plurality of Orthogonal Frequency Division Multiplexing (OFDM) symbols or SC-FDMA symbols in the time domain by a plurality of Resource Blocks (RBs) in the frequency domain.

A slot includes a plurality of OFDM symbols in the time domain. Since OFDMA is adopted for DL in the 3GPP LTE system, one OFDM symbol represents one symbol period. An OFDM symbol may be called an SC-FDMA symbol or symbol period. An RB is a resource allocation unit including a plurality of contiguous subcarriers in one slot.

In a full FDD system, each of 10 subframes may be used simultaneously for DL transmission and UL transmission during a 10-ms duration. The DL transmission and the UL transmission are distinguished by frequency. On the other hand, a UE cannot perform transmission and reception simultaneously in a half FDD system.

The above radio frame structure is purely exemplary. Thus, the number of subframes in a radio frame, the number of slots in a subframe, and the number of OFDM symbols in a slot may be changed.

FIG. 2(b) illustrates frame structure type 2. Frame structure type 2 is applied to a Time Division Duplex (TDD) system. One radio frame is 10ms ($T_f=307200 \cdot T_s$) long, including two half-frames each having a length of 5ms (=153600$\cdot T_s$) long. Each half-frame includes five subframes each being 1ms (=30720$\cdot T_s$) long. An $i^{th}$ subframe includes $2i^{th}$ and $(2i+1)^{th}$ slots each having a length of 0.5ms ($T_{slot}=15360 \cdot T_s$). $T_s$ is a sampling time given as $T_s=1/(15kHz \times 2048)=3.2552 \times 10^{-8}$ (about 33ns).

A type-2 frame includes a special subframe having three fields, Downlink Pilot Time Slot (DwPTS), Guard Period (GP), and Uplink Pilot Time Slot (UpPTS). The DwPTS is used for initial cell search, synchronization, or channel estimation at a UE, and the UpPTS is used for channel estimation and UL transmission synchronization with a UE at an eNB. The GP is used to cancel UL interference between a UL and a DL, caused by the multi-path delay of a DL signal.

[Table 1] below lists special subframe configurations (DwPTS/GP/UpPTS lengths).

[Table 1]

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19700 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | $4384 \cdot T_s$ | $5120 \cdot T_s$ |
| 5 | $6592 \cdot T_s$ | $4384 \cdot T_s$ | $5120 \cdot T_s$ | $20480 \cdot T_s$ | | |
| 6 | $19760 \cdot T_s$ | | | $23040 \cdot T_s$ | | |
| 7 | $21952 \cdot T_s$ | | | - | - | - |
| 8 | $24144 \cdot T_s$ | | | - | - | - |

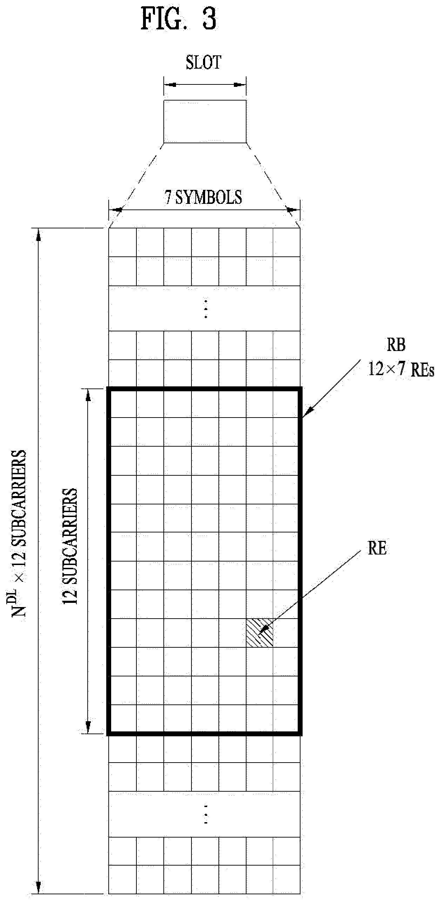

FIG. 3 illustrates an exemplary structure of a DL resource grid for the duration of one DL slot, which may be used in embodiments of the present invention.

Referring to FIG. 3, a DL slot includes a plurality of OFDM symbols in the time domain. One DL slot includes 7 OFDM symbols in the time domain and an RB includes 12 subcarriers in the frequency domain, to which the present invention is not limited.

Each element of the resource grid is referred to as a Resource Element (RE). An RB includes 12x7 REs. The number of RBs in a DL slot, NDL depends on a DL transmission bandwidth. A UL slot may have the same structure as a DL slot.

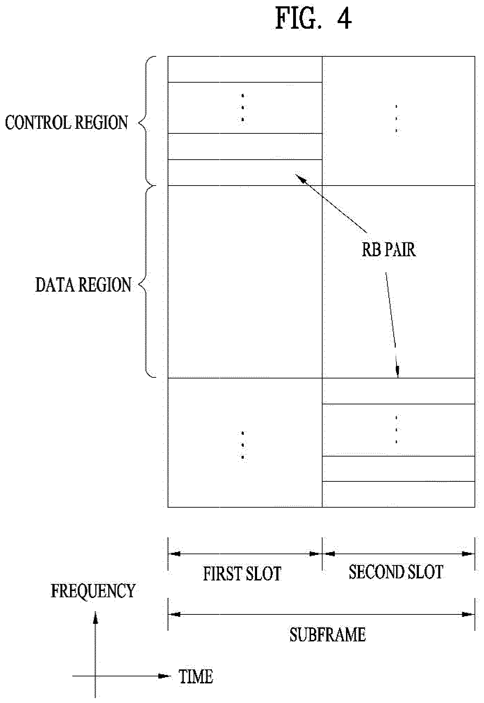

FIG. 4 illustrates a structure of a UL subframe which may be used in embodiments of the present invention.

Referring to FIG. 4, a UL subframe may be divided into a control region and a data region in the frequency domain. A PUCCH carrying UCI is allocated to the control region and a PUSCH carrying user data is allocated to the data region. To maintain a single carrier property, a UE does not transmit a PUCCH and a PUSCH simultaneously. A pair of RBs in a subframe are allocated to a PUCCH for a UE. The RBs of the RB pair occupy different subcarriers in two slots. Thus it is said that the RB pair frequency-hops over a slot boundary.

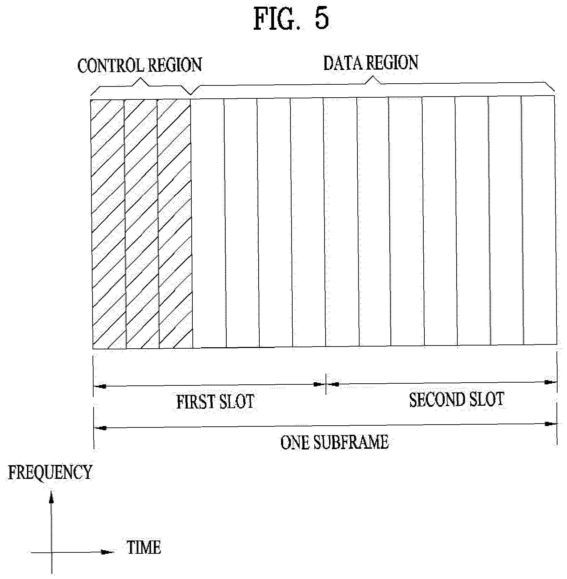

FIG. 5 illustrates a structure of a DL subframe that may be used in embodiments of the present invention.

Referring to FIG. 5, up to three OFDM symbols of a DL subframe, starting from OFDM symbol 0 are used as a control region to which control channels are allocated and the other OFDM symbols of the DL subframe are used as a data region to which a PDSCH is allocated. DL control channels defined for the 3GPP LTE system include a Physical Control Format Indicator Channel (PCFICH), a PDCCH, and a Physical Hybrid ARQ Indicator Channel (PHICH).

The PCFICH is transmitted in the first OFDM symbol of a subframe, carrying information about the number of OFDM symbols used for transmission of control channels (i.e. the size of the control region) in the subframe. The PHICH is a response channel to a UL transmission, delivering an HARQ ACK/NACK signal. Control information carried on the PDCCH is called Downlink Control Information (DCI). The DCI transports UL resource assignment information, DL resource assignment information, or UL Transmission (Tx) power control commands for a UE group.

**2. Carrier Aggregation (CA) Environment**

**2.1 CA Overview**

A 3GPP LTE system (conforming to Rel-8 or Rel-9) (hereinafter, referred to as an LTE system) uses Multi-Carrier Modulation (MCM) in which a single Component Carrier (CC) is divided into a plurality of bands. In contrast, a 3GPP LTE-A system (hereinafter, referred to an LTE-A system) may use CA by aggregating one or more CCs to support a broader system bandwidth than the LTE system. The term CA is interchangeably used with carrier combining, multi-CC environment, or multi-carrier environment.

In the present invention, multi-carrier means CA (or carrier combining). Herein, CA covers aggregation of contiguous carriers and aggregation of non-contiguous carriers. The number of aggregated CCs may be different for a DL and a UL. If the number of DL CCs is equal to the number of UL CCs, this is called symmetric aggregation. If the number of DL CCs is different from the number of UL CCs, this is called asymmetric aggregation. The term CA is interchangeable with carrier combining, bandwidth aggregation, spectrum aggregation, etc.

The LTE-A system aims to support a bandwidth of up to 100MHz by aggregating two or more CCs, that is, by CA. To guarantee backward compatibility with a legacy IMT system, each of one or more carriers, which has a smaller bandwidth than a target bandwidth, may be limited to a bandwidth used in the legacy system.

For example, the legacy 3GPP LTE system supports bandwidths {1.4, 3, 5, 10, 15, and 20MHz} and the 3GPP LTE-A system may support a broader bandwidth than 20MHz using these LTE bandwidths. A CA system of the present invention may support CA by defining a new bandwidth irrespective of the bandwidths used in the legacy system.

There are two types of CA, intra-band CA and inter-band CA. Intra-band CA means that a plurality of DL CCs and/or UL CCs are successive or adjacent in frequency. In other words, the carrier frequencies of the DL CCs and/or UL CCs are positioned in the same band. On the other hand, an environment where CCs are far away from each other in frequency may be called inter-band CA. In other words, the carrier frequencies of a plurality of DL CCs and/or UL CCs are positioned in different bands. In this case, a UE may use a plurality of Radio Frequency (RF) ends to conduct communication in a CA environment.

The LTE-A system adopts the concept of cell to manage radio resources. The above-described CA environment may be referred to as a multi-cell environment. A cell is defined as a pair of DL and UL CCs, although the UL resources are not mandatory. Accordingly, a cell may be configured with DL resources alone or DL and UL resources.

For example, if one serving cell is configured for a specific UE, the UE may have one DL CC and one UL CC. If two or more serving cells are configured for the UE, the UE may have as many DL CCs as the number of the serving cells and as many UL CCs as or fewer UL CCs than the number of the serving cells, or vice versa. That is, if a plurality of serving cells are configured for the UE, a CA environment using more UL CCs than DL CCs may also be supported.

CA may be regarded as aggregation of two or more cells having different carrier frequencies (center frequencies). Herein, the term 'cell' should be distinguished from 'cell' as a geographical area covered by an eNB. Hereinafter, intra-band CA is referred to as intra-band multi-cell and inter-band CA is referred to as inter-band multi-cell.

In the LTE-A system, a Primacy Cell (PCell) and a Secondary Cell (SCell) are defined. A PCell and an SCell may be used as serving cells. For a UE in RRC_CONNECTED state, if CA is not configured for the UE or the UE does not support CA, a single serving cell including only a PCell exists for the UE. On the contrary, if the UE is in RRC_CONNECTED state and CA is configured for the UE, one or more serving cells may exist for the UE, including a PCell and one or more SCells.

Serving cells (PCell and SCell) may be configured by an RRC parameter. A physical-layer ID of a cell, PhysCellId is an integer value ranging from 0 to 503. A short ID of an SCell, SCellIndex is an integer value ranging from 1 to 7. A short ID of a serving cell (PCell or SCell), ServeCellIndex is an integer value ranging from 1 to 7. If ServeCellIndex is 0, this indicates a PCell and the values of ServeCellIndex for SCells are pre-assigned. That is, the smallest cell ID (or cell index) of ServeCellIndex indicates a PCell.

A PCell refers to a cell operating in a primary frequency (or a primary CC). A UE may use a PCell for initial connection establishment or connection reestablishment. The PCell may be a cell indicated during handover. In addition, the PCell is a cell responsible for control-related communication among serving cells configured in a CA environment. That is, PUCCH allocation and transmission for the UE may take place only in the PCell. In addition, the UE may use only the PCell in acquiring system information or changing a monitoring procedure. An Evolved Universal Terrestrial Radio Access Network (E-UTRAN) may change only a PCell for a handover procedure by a higher-layer RRCConnectionReconfiguraiton message including mobilityControlInfo to a UE supporting CA.

An SCell may refer to a cell operating in a secondary frequency (or a secondary CC). Although only one PCell is allocated to a specific UE, one or more SCells may be allocated to the UE. An SCell may be configured after RRC connection establishment and may be used to provide additional radio resources. There is no PUCCH in cells other than a PCell, that is, in SCells among serving cells configured in the CA environment.

When the E-UTRAN adds an SCell to a UE supporting CA, the E-UTRAN may transmit all system information related to operations of related cells in RRC_CONNECTED state to the UE by dedicated signaling. Changing system information may be controlled by releasing and adding a related SCell. Herein, a higher-layer RRCConnectionReconfiguration message may be used. The E-UTRAN may transmit a dedicated signal having a different parameter for each cell rather than it broadcasts in a related SCell.

After an initial security activation procedure starts, the E-UTRAN may configure a network including one or more SCells by adding the SCells to a PCell initially configured during a connection establishment procedure. In the CA environment, each of a PCell and an SCell may operate as a CC. Hereinbelow, a Primary CC (PCC) and a PCell may be used in the same meaning and a Secondary CC (SCC) and an SCell may be used in the same meaning in embodiments of the present invention.

### 2.2 Cross Carrier Scheduling

Two scheduling schemes, self-scheduling and cross carrier scheduling are defined for a CA system, from the perspective of carriers or serving cells. Cross carrier scheduling may be called cross CC scheduling or cross cell scheduling.

In self-scheduling, a PDCCH (carrying a DL grant) and a PDSCH are transmitted in the same DL CC or a PUSCH is transmitted in a UL CC linked to a DL CC in which a PDCCH (carrying a UL grant) is received.

In cross carrier scheduling, a PDCCH (carrying a DL grant) and a PDSCH are transmitted in different DL CCs or a PUSCH is transmitted in a UL CC other than a UL CC linked to a DL CC in which a PDCCH (carrying a UL grant) is received.

Cross carrier scheduling may be activated or deactivated UE-specifically and indicated to each UE semi-statically by higher-layer signaling (e.g. RRC signaling).

If cross carrier scheduling is activated, a Carrier Indicator Field (CIF) is required in a PDCCH to indicate a DL/UL CC in which a PDSCH/PUSCH indicated by the PDCCH is to be transmitted. For example, the PDCCH may allocate PDSCH resources or PUSCH resources to one of a plurality of CCs by the CIF. That is, when a PDCCH of a DL CC allocates PDSCH or PUSCH resources to one of aggregated DL/UL CCs, a CIF is set in the PDCCH. In this case, the DCI formats of LTE Release-8 may be extended according to the CIF. The CIF may be fixed to three bits and the position of the CIF may be fixed irrespective of a DCI format size. In addition, the LTE Release-8 PDCCH structure (the same coding and resource mapping based on the same CCEs) may be reused.

On the other hand, if a PDCCH transmitted in a DL CC allocates PDSCH resources of the same DL CC or allocates PUSCH resources in a single UL CC linked to the DL CC, a CIF is not set in the PDCCH. In this case, the LTE Release-8 PDCCH structure (the same coding and resource mapping based on the same CCEs) may be used.

If cross carrier scheduling is available, a UE needs to monitor a plurality of PDCCHs for DCI in the control region of a monitoring CC according to the transmission mode and/or bandwidth of each CC. Accordingly, an appropriate SS configuration and PDCCH monitoring are needed for the purpose.

In the CA system, a UE DL CC set is a set of DL CCs scheduled for a UE to receive a PDSCH, and a UE UL CC set is a set of UL CCs scheduled for a UE to transmit a PUSCH. A PDCCH monitoring set is a set of one or more DL CCs in which a PDCCH is monitored. The PDCCH monitoring set may be identical to the UE DL CC set or may be a subset of the UE DL CC set. The PDCCH monitoring set may include at least one of the DL CCs of the UE DL CC set. Or the PDCCH monitoring set may be defined irrespective of the UE DL CC set. DL CCs included in the PDCCH monitoring set may be configured to always enable self-scheduling for UL CCs linked to the DL CCs. The UE DL CC set, the UE UL CC set, and the PDCCH monitoring set may be configured UE-specifically, UE group-specifically, or cell-specifically.

If cross carrier scheduling is deactivated, this implies that the PDCCH monitoring set is always identical to the UE DL CC set. In this case, there is no need for signaling the PDCCH monitoring set. However, if cross carrier scheduling is activated, the PDCCH monitoring set is preferably defined within the UE DL CC set. That is, the eNB transmits a PDCCH only in the PDCCH monitoring set to schedule a PDSCH or PUSCH for the UE.

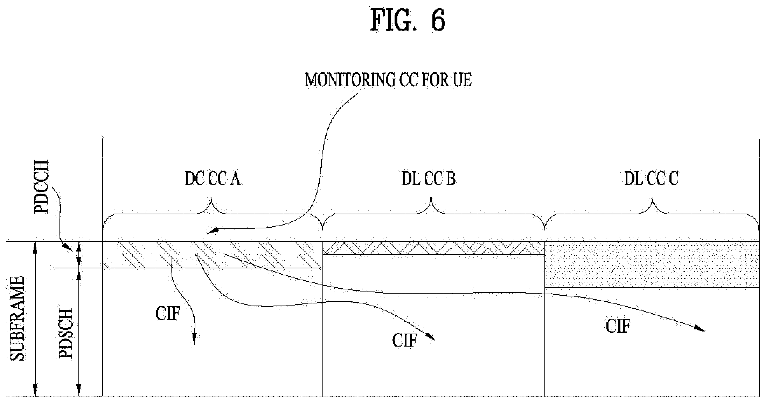

FIG. 6 illustrates a cross carrier-scheduled subframe structure in the LTE-A system, which is used in embodiments of the present invention.

Referring to FIG. 6, three DL CCs are aggregated for a DL subframe for LTE-A UEs. DL CC 'A' is configured as a PDCCH monitoring DL CC. If a CIF is not used, each DL CC may deliver a PDCCH that schedules a PDSCH in the same DL CC without a CIF. On the other hand, if the CIF is used by higher-layer signaling, only DL CC 'A' may carry a PDCCH that schedules a PDSCH in the same DL CC 'A' or another CC. Herein, no PDCCH is transmitted in DL CC 'B' and DL CC 'C' that are not configured as PDCCH monitoring DL CCs.

## 3. Common Control Channel and Broadcast Channel Allocation Method

### 3.1 Initial access procedure

An initial access procedure may include a cell discovery procedure, a system information acquisition procedure and a random access procedure.

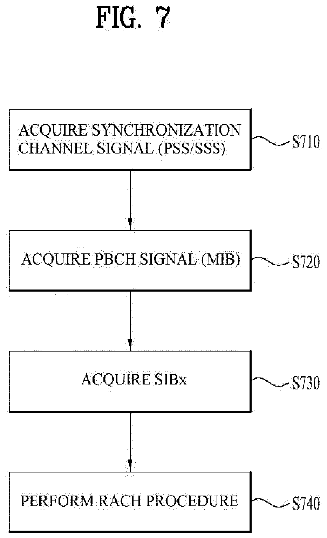

FIG. 7 is a diagram showing an example of an initial access procedure used in an LTE/LTE-A system.

A UE may receive synchronization signals (e.g., a primary synchronization signal (PSS) and a secondary synchronization signal (SSS)) transmitted from an eNB to acquire downlink synchronization information. The synchronization signals are transmitted twice per frame (at an interval of 10 ms). That is, the synchronization signals are transmitted at an interval of 5 ms (S710).

The downlink synchronization information acquired in step S710 may include a physical cell ID (PCID), downlink time and frequency synchronization and cyclic prefix (CP) length information.

Thereafter, the UE receives a physical broadcast channel (PBCH) signal transmitted via a PBCH. At this time, the PBCH signal is repeatedly transmitted four times in different scrambling sequences in four frames (that is, 40 ms) (S720).

The PBCH signal includes a master information block (MIB) as system information. One MIB has a total size of 24 bits and 14 bits thereof are used to indicate physical HARQ indicator channel (PHICH) configuration information, downlink cell bandwidth (dl-bandwidth) information and system frame number (SFN). The remaining 10 bits thereof are spare bits.

Thereafter, the UE may receive different system information blocks (SIBs) transmitted from the eNB to acquire the remaining system information. The SIBs are transmitted on a DL-SCH and presence/absence of the SIB is checked by a PDCCH signal masked with a system information radio network temporary identifier (SI-RNTI) (S730).

System information block type 1 (SIB1) of the SIBs includes parameters necessary to determine whether the cell is suitable for cell selection and information on scheduling of the other SIBs on a time axis. System information block type 2 (SIB2) includes common channel information and shared channel information. SIB3 to SIB8 include cell reselection related information, inter-frequency information, intra-frequency information, etc. SIB9 is used to deliver the name of a home eNodeB (HeNB) and SIB10 to SIB12 include an Earthquake and Tsunami Warning Service (ETWS) notification and a commercial mobile alert system (CMAS) message. SIB13 includes MBMS related control information.

The UE may perform the random access procedure when steps S710 to S730 are performed. In particular, the UE may acquire parameters for transmitting a physical random access channel (PRACH) signal upon receiving SIB2 of the above-described SIBs. Accordingly, the UE may generate and transmit a PRACH signal using the parameters included in SIB2 to perform the random access procedure with the eNB (S740).

### 3.2 Physical broadcast channel (PBCH)

In an LTE/LTE-A system, a PBCH is used for MIB transmission. Hereinafter, a method for configuring a PBCH will be described.

A block of bits $b(0),...,b(M_{bit}-1)$ is scrambled with a cell-specific sequence prior to modulation to calculate a block of scrambled bits $\tilde{b}(0),...,\tilde{b}(M_{bit}-1)$. At this time, $M_{bit}$ denotes the number of bits transmitted on the PBCH and is 1920 bits for normal cyclic prefix and 1728 bits for extended cyclic prefix.

Equation 1 below shows one of methods for scrambling the block of bits.

$$[\text{Equation 1}]$$

$$\tilde{b}(i) = \big(b(i) + c(i)\big)\bmod 2$$

In Equation 1, $c(i)$ denotes a scrambling sequence. The scrambling sequence is initialized with $c_{init} = N_{ID}^{cell}$ in each radio frame fulfilling $n_f \bmod 4 = 0$.

The block of scrambled bits $\tilde{b}(0),...,\tilde{b}(M_{bit}-1)$ is modulated to calculate a block of complex-valued modulation symbols $d(0),...,d(M_{symb}-1)$. At this time, a modulation scheme applicable to a physical broadcast channel is quadrature phase shift keying (QPSK).

The block of modulation symbols $d(0),...,d(M_{symb}-1)$ is mapped to one or more layers. At this time, $M_{symb}^{(0)} = M_{symb}$. Thereafter, the block of modulation symbols is precoded to calculate a block of vectors $y(i) = [y^{(0)}(i) ... y^{(P-1)}(i)]^T$. At this time, $i = 0,...,M_{symb}-1$. In addition, $y^{(p)}(i)$ denotes a signal for an antenna port p, where $p = 0,...,P-1$ and $P \in \{1,2,4\}$. p denotes the number of an antenna port for a cell-specific reference signal.

The block of complex-valued symbols $y^{(p)}(0),...,y^{(p)}(M_{symb}-1)$ for each antenna port is transmitted during 4 consecutive radio frames starting in each radio frame fulfilling $n_f \bmod 4 = 0$. In addition, the block of complex-valued symbols is mapped to resource elements (k, l) not reserved for transmission of reference signals in increasing order of first the index k, then the index 1 of slot 1 of subframe 0 and finally the radio frame number. The resource element indices are given in Equation 2.

[Equation 2]

$$k = \frac{N_{RB}^{DL} N_{sc}^{RB}}{2} - 36 + k', \quad k' = 0,1,\ldots,71$$
$$l = 0,1,\ldots,3$$

Resource elements for reference signals are excluded from mapping. The mapping operation assumes that cell-specific reference signals for antenna ports 0 to 3 are present irrespective of the actual configuration. The UE assumes that the resource elements assumed to be reserved for reference signals in the mapping operation but not used for transmission of reference signals are not available for PDSCH transmission. The UE does not make any other assumptions about these resource elements.

**3.3 MIB (master information block)**

The MIB is system information transmitted on a PBCH. That is, the MIB includes system information transmitted via a BCH. A signaling radio bearer is not applicable to the MIB, a radio link control-service access point (RLC-SAP) is in a transparent mode (TM), a logical channel is a broadcast control channel (BCCH), and the MIB is transmitted from an E-UTRAN to a UE. Table 2 below shows an example of an MIB format.

[Table 2]

```
-- ASN1START

MasterInformationBlock ::=         SEQUENCE {
        dl-Bandwidth                       ENUMERATED {
                                               n6, n15, n25, n50, n75, n100},
        phich-Config                       PHICH-Config,
        systemFrameNumber                  BIT STRING (SIZE (8)),
        spare                              BIT STRING (SIZE (10))
}

-- ASN1STOP
```

The MIB includes a downlink bandwidth (dl-Bandwidth) parameter, a PHICH configuration (PHICH-config) parameter, a system frame number (systemFrameNumber) parameter and spare bits.

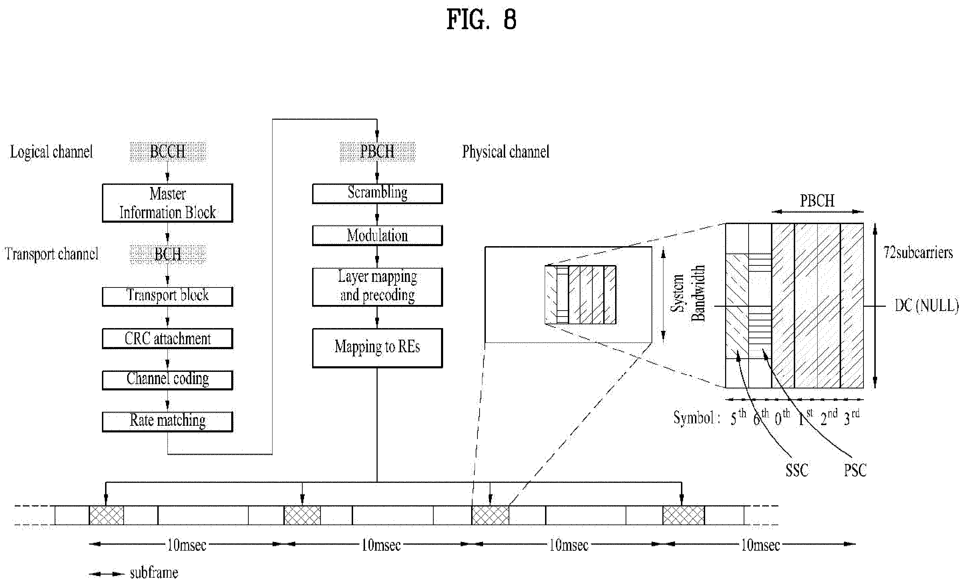

The downlink bandwidth parameter indicates 16 different transmission bandwidth configurations $N_{RB}$. For example, n6 corresponds to 6 resource blocks and n15 corresponds to 15 resource blocks. The PHICH configuration parameter indicates a PHICH configuration necessary to receive a control signal on a PDCCH necessary to receive a DL-SCH. The system frame number (SFN) parameter defines 8 most significant bits (MSBs) of the SFN. At this time, 2 least significant bits (LSBs) of the SFN are indirectly acquired via decoding of the PBCH. For example, timing of 40 ms PBCH TTI indicates 2 LSBs. This will be described in detail with reference to FIG. 8.

FIG. 8 is a diagram showing one method for transmitting a broadcast channel signal.

Referring to FIG. 8, an MIB transmitted via a BCCH, which is a logical channel, is delivered via a BCH which is a transport channel. At this time, the MIB is mapped to a transport block, and an MIB transport block is attached with CRC, is subjected to a channel coding and rate matching procedure and is delivered to a PBCH which is a physical channel. Thereafter, the MIB is subjected to scrambling and modulation procedures and a layer mapping and precoding procedure and then is mapped to a resource element (RE). That is, the same PBCH signal is scrambled and transmitted in different scrambling sequences during a period of 40 ms (that is, four frames). Accordingly, the UE may detect one PBCH every 40 ms via blind decoding and estimate the remaining 2 bits of the SFN.

For example, in a PBCH TTI of 40 ms, the LSB of the SFN is set to "00" when a PBCH signal is transmitted on a first radio frame, is set to "01" when the PBCH signal is transmitted on a second radio frame, is set to "10" when the PBCH signal is transmitted on a third radio frame, and is a set to "11" when the PBCH signal is transmitted on a last radio frame.

In addition, referring to FIG. 8, the PBCH may be allocated to 72 subcarriers located at the center of the first four OFDM symbols of a second slot (slot #1) of a first subframe (subframe #0) of each frame. At this time, a subcarrier region, to which the PBCH is allocated, is always a region corresponding to 72 center subcarriers irrespective of cell bandwidth. This allows detection of a PBCH even when downlink cell bandwidth is not known to the UE.

In addition, a primary synchronization channel (PSC), in which a primary synchronization signal (PSS) is transmitted, has a TTI of 5 ms and is allocated to a last symbol of a first slot (slot #0) of subframes #0 and #5 of each frame. A secondary synchronization channel (SSC), on which a secondary synchronization signal (SSS) is transmitted, has a TTI of 5 ms and is allocated to the second to last symbol (that is, a previous symbol of the PSS) of the same slot. In addition, the PSC and the SSC always occupy 72 center subcarriers irrespective of cell bandwidth and are allocated to 62 subcarriers.

## 4. PBCH Transmission Method for MTC UE

### 4.1 MTC UE

The next generation system of LTE-A considers constructing UEs of low cost/low specification which mainly perform data communication for, for example, meter reading, measurement of water level, utilization of a surveillance camera, stock report about a vending machine, and the like. For simplicity, such UEs will be referred to as machine type communication (MTC) UEs in the embodiments of the present invention.

For an MTC UE, the amount of transmitted data is small, and UL/DL data transmission/reception occasionally occurs. Accordingly, it is preferable to reduce the cost per UE and battery consumption according to such low data transmission rate in terms of efficiency. The MTC UE has low mobility, and thus the channel environment thereof is almost invariable. In the current LTE-A, expanding the coverage of the MTC UE compared to the conventional cases is under consideration. To this end, various coverage enhancement techniques for the MTC UE are under discussion.

For example, when an MTC UE performs initial access to a specific cell, the MTC UE may receive a master information block (MIB) for the cell from an eNodeB (eNB) operating/controlling the cell over a Physical Broadcast Channel (PBCH) and receive system information block (SIB) information and radio resource control (RRC) parameters over a PDSCH.

The MTC UE may be installed in a region (e.g., a basement, etc.) providing a poor transmission environment compared to the legacy UE, and thus if the eNodeB transmits an SIB to the MTC UE using the same method as used for the legacy UE, the MTC UE may have difficulty in receiving the SIB. To address this difficulty, the eNB may apply coverage enhancement techniques such as subframe repetition and subframe bundling in transmitting the PBCH or SIB to an MTC UE having a coverage issue over a PDSCH.

In addition, if the eNB transmits a PDCCH and/or a PDSCH to MTC UEs using the same method as used for the legacy UE, an MTC UE having a coverage issue has difficulty in receiving the PDCCH and/or PDSCH. To address this difficulty, the eNB may repeatedly transmit the PBCH to the MTC UE having the coverage issue.

### 4.2 Methods for Repeatedly Transmitting PBCH

Hereinafter, a description will be given of methods for repeatedly transmitting the PBCH described in section 3, for an MTC UE.

The payload of the PBCH includes a downlink system bandwidth, PHICH configuration information and/or system frame number (SFN) information. The eNB adds CRC to the PBCH payload, performs 1/3 tail-biting convolutional coding, and then transmits the PBCH.

The PBCH is transmitted in the unit of 4 radio frames (40 ms). For example, the PBCH is transmitted through 4 OFDM symbols in the second slot of subframe #0 of radio frame #0. The number of encoded bits of the PBCH transmitted at each PBCH transmission moment is 480 bits. Accordingly, 1920 encoded bits are transmitted through four transmissions. For simplicity of description, it is assumed that the 1920 PBCH encoded bits are configured by PBCH(0), PBCH(1), PBCH(2) and PBCH(3) which are concatenated and have the same size of 480 bits (see FIG. 8). Herein, PBCH (k mod 4) indicates PBCH encoded bits having the size of 480 bits transmitted on one OFDM symbol.

### 4.2.1 Method for Configuring PBCH for MTC UE

Hereinafter, a description will be given of a method for configuring a PBCH in the case where a PBCH transmission region and a legacy PBCH transmission region are differently configured for the MTC UE.

When a PBCH is transmitted at a position (e.g., the first slot of subframe #0 or another subframe) different from the second slot of subframe #0 (see FIG. 8), one encoded bit block may be selected and transmitted from among the 4 PBCH encoded bit blocks. When the position of transmission is different from the second slot of subframe #0, the number of resource elements (REs) for transmission of the selected PBCH encoded block depends on whether or not a cell reference signal (CRS) a channel status information-reference signal (CSI-RS), PDCCH, PHICH and/or PCFICH are transmitted.

In this case, information about the transmission region in which the PBCH encoded bit block is transmitted may be information pre-configured in the system or may be set to a position operatively connected with a PCID acquired over a synchronization channel.

Based on the descriptions given above, the following methods may be used to configure a PBCH encoded bit block. For simplicity of description, it is assumed that PBCH(1) is selected and transmitted from among the four PBCH encoded bit blocks. The same methods may also be applicable when the other PBCH encoded bit blocks are selected.

**4.2.1.1 Method 1**

If the number of REs for transmitting the PBCH encoded bit block in a corresponding subframe is less than 240, not all of the PBCH(1) having the size of 480 bits can be transmitted. Accordingly, bits are transmitted on the available REs starting with the first bit, and then the remaining bit string of PBCH(1) is not transmitted.

**4.2.1.2 Method 2**

If the number of REs for transmitting the PBCH encoded bit block in a corresponding subframe is greater than 240, the available REs may be more than necessary REs for transmission of the whole PBCH(1) having the size of 480 bits. Therefore, the eNB may retransmit the first part of PBCH(1) on the remaining available REs in a cycling manner.

**4.2.1.3 Method 3**

If the number of REs for transmitting the PBCH encoded bit block in a corresponding subframe is greater than 240, the available REs may be more than necessary REs for transmission of the whole PBCH(1) having the size of 480 bits. Therefore, the eNB may transmit the first part of PBCH(2), which is the next PBCH encoded bit block, on the remaining available REs.

**4.2.1.4 Method4**

If the number of REs for transmitting the PBCH encoded bit block in a corresponding subframe is greater than 240, the eNB transmits the entirety of PBCH(1) having the size of 480 bits in the corresponding frame. Then, the eNB may not transmit anything on the remaining REs in the subframe.

**4.2.1.5 Method 5**

If the number of REs for transmitting the PBCH encoded bit block in a corresponding subframe is greater than 240, the eNB may be configured to transmit the first part of a specific pre-configured PBCH encoded bit block (e.g., PBCH(0)) on the remaining available REs other than the REs used for transmission of the PBCH(1), regardless of the selected PBCH encoded bit block.

That is, an MTC PBCH transmitted through a resource region different from the legacy PBCH transmission region may be configured as illustrated in Methods 1 to 5, according to the size of a resource region allocated to each subframe.

In addition, the legacy PBCH transmission region may be configured by 6 resource blocks (RBs) at the center frequency of the second slot of the first subframe in every frame, and the MTC PBCH transmission region may be allocated in the second, third and/or fourth subframes in every frame. Herein, the size of the MTC PBCH transmission region may change according to the CSI-RS and CRS configured in each cell. That is, the PBCH may be configured using Method 1 if the size of the transmission region of the MTC PBCH is less than 240 REs, may be configured using one of or a combination of one or more of Methods 2 to 5 if the size of the transmission region is greater than or equal to 240 REs.

**4.2.2 Method for Transmitting MTC PBCH In Consideration of Transmission of legacy PBCH**

According to embodiments of the present invention, an MTC PBCH encoded bit block for an MTC UE may be repeatedly transmitted on time/frequency resources different from the position at which a legacy PBCH for normal UE is transmitted (see FIG. 8). That is, in embodiments of the present invention described below, it is basically assumed that the legacy PBCH and the MTC PBCH contain the same MIB. However, as described in FIG. 8, the legacy PBCH is transmitted through a resource region defined in the LTE/LTE-A system (i.e., a legacy resource region), and the MTC PBCH is repeatedly transmitted for the MTC UE in a region other than the legacy resource region.

An exemplary method for selecting a PBCH encoded bit block is shown in Table 3 below. Here, it is assumed that transmission of the PBCH encoded bit block is repeated once on a resource (e.g., the second slot of subframe #1) other than the resources for the legacy PBCH.

[Table 3]

| PBCH encoded bit block | Radio frame #0 | | Radio frame #1 | | Radio frame #2 | | Radio frame #3 | |
|---|---|---|---|---|---|---|---|---|
| | Subframe #0 | Subframe #1 | Subframe #0 | Subframe #1 | Subframe #0 | Subframe #1 | Subframe #0 | Subframe #1 |
| | PBCH(0) | PBCH(2) or PBCH(3) | PBCH(1) | PBCH(3) or PBCH(2) | PBCH(2) | PBCH(0) or PBCH(1) | PBCH(3) | PBCH(1) or PBCH(0) |

In Table 3, legacy PBCH encoded bit blocks may be transmitted in the first subframe (subframe #0) in each radio frame, and the MTC PBCH encoded bit blocks to be repeatedly transmitted for the MTC UE may be transmitted in the second subframe (subframe #1) in each radio frame. Thereby, the eNB may transmit all PBCH encoded bit blocks within as short a time as possible.

Alternatively, the eNB may retransmit a PBCH encoded bit block identical to the last PBCH encoded bit block previously transmitted in the resource region of the legacy PBCH.

[Table 4]

| | Radio frame #0 | | Radio frame #1 | | Radio frame #2 | | Radio frame #3 | |
|---|---|---|---|---|---|---|---|---|
| | Subframe #0 | Subframe #1 | Subframe #0 | Subframe #1 | Subframe #0 | Subframe #1 | Subframe #0 | Subframe #1 |
| PBCH encoded bit block | PBCH(0) | PBCH(0) | PBCH(1) | PBCH(1) | PBCH(2) | PBCH(2) | PBCH(3) | PBCH(3) |

Referring to Table 4, legacy PBCH encoded bit blocks may be transmitted in the first subframe (subframe #0) in each radio frame, and an MTC PBCH encoded bit block identical to the PBCH encoded bit block transmitted for the MTC UE in the first subframe may be repeatedly transmitted in the second subframe (subframe #1). If the PBCH is transmitted using the method of Table 4, reliability and reception rate of PBCH transmission may be enhanced.

Table 5 illustrates repeatedly transmitting an MTC PBCH twice at positions different from the resource region for transmission of the legacy PBCH using the method of Table 3.

[Table 5]

|  |  | PBCH encoded bit block |
|---|---|---|
| Radio frame #0 | Subframe #0 | PBCH(0) |
|  | Subframe #1 | PBCH(2) or PBCH(3) |
|  | Subframe #2 | PBCH(3) or PBCH(2) |
| Radio frame #1 | Subframe #0 | PBCH(1) |
|  | Subframe #1 | PBCH(0) or PBCH(3) |
|  | Subframe #2 | PBCH(3) or PBCH(0) |
| Radio frame #2 | Subframe #0 | PBCH(2) |
|  | Subframe #1 | PBCH(1) or PBCH(0) |
|  | Subframe #2 | PBCH(0) or PBCH(1) |
| Radio frame #3 | Subframe #0 | PBCH(3) |
|  | Subframe #1 | PBCH(2) or PBCH(1) |
|  | Subframe #2 | PBCH(1) or PBCH(2) |

Referring to Table 5, legacy PBCH encoded bit blocks may be transmitted in the first subframe (subframe #0) in each radio frame, and the MTC PBCH encoded bit blocks to be repeatedly transmitted for the MTC UE may be transmitted in the second subframe (subframe #1) and the third subframe (subframe #2) in each radio frame.

That is, with the methods according to Tables 3 to 5, the MTC UE to stably receive PBCH by decoding both the legacy region and the region in which MTC PBCH encoded bit blocks are transmitted. Herein, the region in which the MTC PBCH is prenotified to the UE through a higher layer signal or may be predetermined in the system. In addition, for the legacy UE, MIB may be acquired by decoding only the legacy PBCH transmission region.

In addition, if the MTC PBCH is repeatedly transmitted three or more times, an MTC PBCH encoded bit block may be transmitted in the fourth subframe. In this case, all four PBCH encoded bit blocks may be transmitted in the first to fourth subframes in one frame.

## 4.3 Method for Receiving MTC PBCH

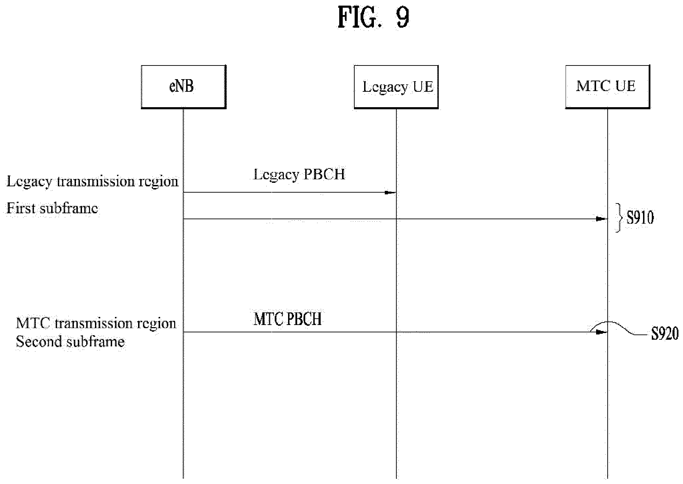

Hereinafter, a description will be given of a method for receiving a PBCH in a case where the MTC UE and a legacy UE coexist. FIG. 9 is a diagram illustrating one of methods for transmitting and receiving a PBCH in a case where an MTC UE and a legacy UE coexist.

An eNB may generate and transmit a PBCH. In this case, the PBCH is preferably transmitted in consideration of both the MTC UE and the legacy UE. That is, as illustrated in FIG. 8, the legacy PBCH may be configured and transmitted through the PBCH transmission region defined in the LTE/LTE-A system. The legacy PBCH may be received by both the legacy UE and the MTC UE (S910).

In addition, the eNB may repeatedly transmit the PBCH for the MTC UE. That is, the eNB may configure an MTC PBCH based on the method for configuring the MTC PBCH described in section 4.2.1, and transmit the MTC PBCH based on the method for transmitting the MTC PBCH described in section 4.2.2 (S920).

In step S920, since the legacy UE does not know the MTC transmission region, the legacy UE cannot decode the MTC transmission region. Only the MTC UE may receive the MTC PBCH by decoding the repeatedly transmitted MTC transmission region.

In embodiments of the present invention, the legacy PBCH is transmitted to both the legacy UE and the MTC UE and may be referred to as a first PBCH, and the MTC PBCH is transmitted only to the MTC UE and may be referred to as a second PBCH. Unless mentioned otherwise, it is assumed that the first PBCH and the second PBCH are configured by 4 PBCH encoded bit blocks.

Embodiments of the present invention have been described above, assuming that the legacy PBCH and the MTC PBCH contain the same system information (i.e., MIB). In contrast with this assumption, the MTC PBCH may be configured with system information completely different from the system information in the legacy PBCH.

**5. Apparatuses**

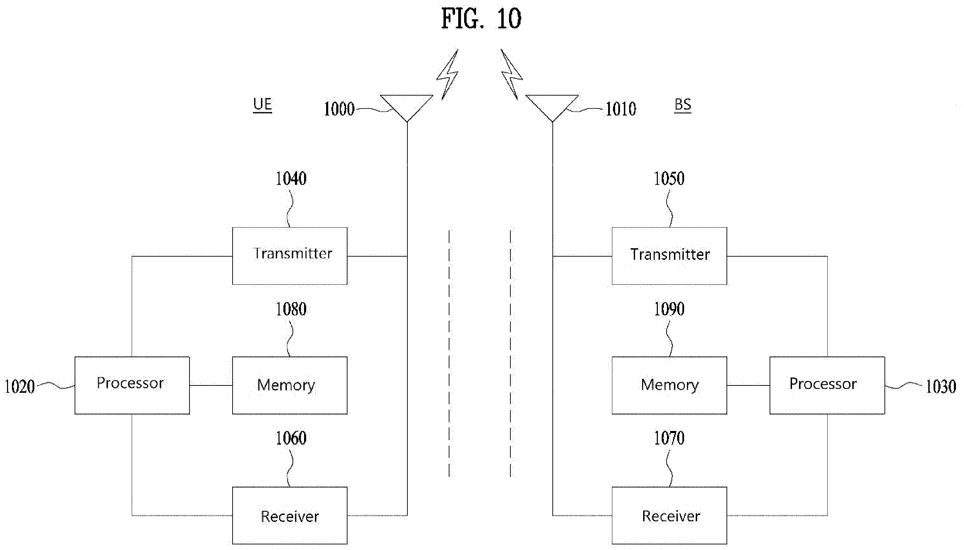

Apparatuses illustrated in FIG. 10 are means that can implement the methods described before with reference to FIGS. 1 to 9.

A UE may act as a transmission end on a UL and as a reception end on a DL. A BS may act as a reception end on a UL and as a transmission end on a DL.

That is, each of the UE and the BS may include a Transmitter (Tx) 1040 or 1050 and Receiver (Rx) 1060 or 1070, for controlling transmission and reception of information, data, and/or messages, and an antenna 1000 or 1010 for transmitting and receiving information, data, and/or messages.

Each of the UE and the BS may further include a processor 1020 or 1030 for implementing the afore-described embodiments of the present invention and a memory 1080 or 1090 for temporarily or permanently storing operations of the processor 1020 or 1030.

The embodiments of the present invention may be implemented using the components and functions of the UE and the eNB described above. For example, the processor of the eNB may allocate and transmit a PBCH by combining the methods disclosed in sections 1 to 4 above. The processor of the UE may receive the legacy PBCH through the legacy transmission region and receive the MTC PBCH through the MTC transmission region.

The Tx and Rx of the UE and the BS may perform a packet modulation/demodulation function for data transmission, a high-speed packet channel coding function, OFDMA packet scheduling, TDD packet scheduling, and/or channelization. Each of the UE and the BS of FIG. 10 may further include a low-power Radio Frequency (RF)/Intermediate Frequency (IF) module.

Meanwhile, the UE may be any of a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, a hand-held PC, a laptop PC, a smart phone, a Multi Mode-Multi Band (MM-MB) terminal, etc.

The smart phone is a terminal taking the advantages of both a mobile phone and a PDA. It incorporates the functions of a PDA, that is, scheduling and data communications such as fax transmission and reception and Internet connection into a mobile phone. The MB-MM terminal refers to a terminal which has a multi-modem chip built therein and which can operate in any of a mobile Internet system and other mobile communication systems (e.g. CDMA 2000, WCDMA, etc.).

Embodiments of the present invention may be achieved by various means, for example, hardware, firmware, software, or a combination thereof

In a hardware configuration, the methods according to exemplary embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present invention may be implemented in the form of a module, a procedure, a function, etc. performing the above-described functions or operations. A software code may be stored in the memory 1080 or 1090 and executed by the processor 1040 or 1030. The memory is located at the interior or exterior of the processor and may transmit and receive data to and from the processor via various known means.

Those skilled in the art will appreciate that the present invention may be carried out in other specific ways than those set forth herein without departing from the essential characteristics of the present invention. The above embodiments are therefore to be construed in all aspects as illustrative and not restrictive. The scope of the invention should be determined by the appended claims.

[Industrial Applicability]

Embodiments of the present invention are applicable to various wireless access systems including a 3GPP system, a 3GPP2 system, and/or an IEEE 802.xx system. In addition to these wireless access systems, the embodiments of the present invention are applicable to all technical fields in which the wireless access systems find their applications.

**Claims**

1. A method for transmitting a physical broadcast channel, PBCH, in a wireless access system supporting machine type communication, MTC, the method performed by an evolved Node B, eNB, and comprising:

   broadcasting (S910) a first PBCH through a first transmission region in a first subframe which is a starting subframe of a frame;
   **characterized by**:

   repeatedly broadcasting (S920) a second PBCH through a second transmission region in a second subframe,
   wherein the first subframe is contiguous with the second subframe,
   wherein the second transmission region is configured based on a channel status information reference signal, CSI-RS, in the second subframe,
   wherein the first PBCH is a legacy PBCH for a normal user equipment, UE, and the second PBCH is a MTC PBCH for a MTC UE,
   wherein the first transmission region is configured by 72 subcarriers at a center frequency of a second slot of the first subframe in every frame, and
   wherein the first PBCH and the second PBCH are configured with a same PBCH encoded bit block.

2. The method according to one of claims 1, wherein the second transmission region is further configured based on at least one of a cell reference signal, CRS, a physical downlink control channel, PDCCH, a physical HARQ indicator channel, PHICH, or a physical control format indicator channel, PCFICH, transmitted in the second subframe.

3. The method according to claim 1, further comprising:

   generating four PBCH encoding bit blocks for broadcasting a master information block, MIB, and
   wherein the four PBCH encoding bit blocks are transmitted during four consecutive frames.

4. The method according to claim 1, wherein the second PBCH is repeatedly broadcast at least two times in the second transmission region.

5. An evolved Node B, eNB, for transmitting a physical broadcast channel, PBCH, in a wireless access system supporting machine type communication, MTC, the eNB comprising:

   a transmitter (1050); and
   a processor (1030) for supporting transmission of the PBCH,
   wherein the processor is configured to control the transmitter to broadcast a first PBCH through a first transmission region in a first subframe which is a starting subframe of a frame,
   **characterized in that**:

   the processor is further configured to control the transmitter to repeatedly broadcast a second PBCH through a second transmission region in a second subframe,
   wherein the first subframe is contiguous with the second subframe,
   wherein the second transmission region is configured based on a channel status information reference signal, CSI-RS, in the second subframe,
   wherein the first PBCH is a legacy PBCH for a normal user equipment, UE, and the second PBCH is a MTC PBCH for a MTC UE,
   wherein the first transmission region is configured by 72 subcarriers at a center frequency of a second slot of the first subframe in every frame, and
   wherein the legacy PBCH and the MTC PBCH are configured with a same PBCH encoded bit block.

6. The evolved Node B according to claim 5, wherein the second transmission region is further configured based on at least one of a cell reference signal, CRS, a physical downlink control channel, PDCCH, a physical HARQ indicator channel, PHICH, or a physical control format indicator channel, PCFICH, transmitted in the second subframe.

7. The evolved Node B according to claim 5, wherein the processor is further configured to generate four PBCH encoding bit blocks for broadcasting a master information block, MIB, and

wherein the four PBCH encoding bit blocks are transmitted during four consecutive frames.

8. The evolved Node B according to claim 5, wherein the second PBCH is repeatedly broadcast at least two times in the second transmission region.

**Patentansprüche**

1. Verfahren zur Übertragung eines physikalischen Rundfunkkanals, PBCH, in einem drahtlosen Zugangssystem zur Unterstützung einer Maschinenkommunikation, MTC, wobei das Verfahren durch einen weiterentwickelten Node B, eNB, durchgeführt wird und aufweist:

Rundsenden (S910) eines ersten PBCH durch einen ersten Übertragungsbereich in einem ersten Subrahmen, der ein Anfangssubrahmen eines Rahmens ist;
**gekennzeichnet durch**:

wiederholtes Rundsenden (S920) eines zweiten PBCH durch einen zweiten Übertragungsbereich in einem zweiten Subrahmen,
wobei der erste Subrahmen zusammenhängend mit dem zweiten Subrahmen ist,
wobei der zweite Übertragungsbereich basierend auf einem Kanalstatusinformationsreferenzsignal, CSI-RS, in dem zweiten Subrahmen konfiguriert wird,
wobei der erste PBCH ein Altsystem-PBCH für ein normales Benutzergerät, UE, ist und der zweite PBCH ein MTC-PBCH für ein MTC-UE ist,
wobei der erste Übertragungsbereich durch 72 Subträger bei einer Mittenfrequenz eines zweiten Schlitzes des ersten Subrahmens in jedem Rahmen konfiguriert wird, und
wobei der erste PBCH und der zweite PBCH mit einem gleichen PBCHkodierten Bitblock konfiguriert werden.

2. Verfahren nach Anspruch 1, wobei der zweite Übertragungsbereich ferner basierend auf einem Zellenreferenzsignal, CRS, und/oder einem physikalischen Downlink-Steuerkanal, PDCCH, und/oder einem physikalischen HARQ-Indikatorkanal, PHICH, und/oder einem physikalischen Steuerformatindikatorkanal, PCFICH, die in dem zweiten Subrahmen übertragen werden, konfiguriert wird.

3. Verfahren nach Anspruch 1, das ferner aufweist:

Erzeugen von vier PBCH-Kodierungsbitblöcken zum Rundsenden eines Master-Informationsblocks, MIB, und wobei die vier PBCH-Kodierungsbitblöcke während vier aufeinanderfolgenden Rahmen übertragen werden.

4. Verfahren nach Anspruch 1, wobei der zweite PBCH in dem zweiten Übertragungsbereich wenigstens zweimal wiederholt rundgesendet wird.

5. Weiterentwickelter Node B, eNB, zur Übertragung eines physikalischen Rundfunkkanals, PBCH, in einem drahtlosen Zugangssystem zur Unterstützung einer Maschinenkommunikation, MTC, wobei der eNB aufweist:

einen Sender (1050); und
einen Prozessor (1030) zur Unterstützung der Übertragung des PBCH,
wobei der Prozessor konfiguriert ist, um den Sender zu steuern, um einen ersten PBCH durch einen ersten Übertragungsbereich in einem ersten Subrahmen, der ein Anfangssubrahmen eines Rahmens ist, rundzusenden;
**dadurch gekennzeichnet, dass**:

der Prozessor ferner konfiguriert ist, um den Sender zu steuern, um einen zweiten PBCH durch einen zweiten Übertragungsbereich in einem zweiten Subrahmen wiederholt rundzusenden,
wobei der erste Subrahmen zusammenhängend mit dem zweiten Subrahmen ist,
wobei der zweite Übertragungsbereich basierend auf einem Kanalstatusinformationsreferenzsignal, CSI-RS, in dem zweiten Subrahmen konfiguriert wird,
wobei der erste PBCH ein Altsystem-PBCH für ein normales Benutzergerät, UE, ist und der zweite PBCH ein MTC-PBCH für ein MTC-UE ist,

wobei der erste Übertragungsbereich durch 72 Subträger bei einer Mittenfrequenz eines zweiten Schlitzes des ersten Subrahmens in jedem Rahmen konfiguriert wird, und

wobei der Altsystem-PBCH und der MTC-PBCH mit einem gleichen PBCHkodierten Bitblock konfiguriert werden.

6. Weiterentwickelter Node B nach Anspruch 5, wobei der zweite Übertragungsbereich ferner basierend auf einem Zellenreferenzsignal, CRS, und/oder einem physikalischen Downlink-Steuerkanal, PDCCH, und/oder einem physikalischen HARQ-Indikatorkanal, PHICH, und/oder einem physikalischen Steuerformatindikatorkanal, PCFICH, die in dem zweiten Subrahmen übertragen werden, konfiguriert wird.

7. Weiterentwickelter Node B nach Anspruch 5, wobei der Prozessor ferner konfiguriert ist, um vier PBCH-Kodierungsbitblöcken zum Rundsenden eines Master-Informationsblocks, MIB, zu erzeugen, und

wobei die vier PBCH-Kodierungsbitblöcke während vier aufeinanderfolgenden Rahmen übertragen werden.

8. Weiterentwickelter Node B nach Anspruch 5, wobei der zweite PBCH in dem zweiten Übertragungsbereich wenigstens zweimal wiederholt rundgesendet wird.

**Revendications**

1. Procédé pour émettre un canal physique de diffusion, PBCH, dans un système d'accès sans fil prenant en charge une communication de type machine, MTC, le procédé étant réalisé par un nœud B évolué, eNB, et comprenant :

la diffusion (S910) d'un premier PBCH par l'intermédiaire d'une première région d'émission dans une première sous-trame qui est une sous-trame de départ d'une trame ;

**caractérisé par** :

la diffusion répétée (S920) d'un second PBCH par l'intermédiaire d'une seconde région d'émission dans une seconde sous-trame,

dans lequel la première sous-trame est contiguë avec la seconde sous-trame,

dans lequel la seconde région d'émission est configurée sur la base d'un signal de référence d'information d'état de canal, CSI-RS, dans la seconde sous-trame,

dans lequel le premier PBCH est un PBCH hérité pour un équipement utilisateur, UE, normal et le second PBCH est un PBCH MTC pour un UE MTC,

dans lequel la première région d'émission est configurée par 72 sous-porteuses à une fréquence centrale d'un second créneau de la première sous-trame dans chaque trame, et

dans lequel le premier PBCH et le second PBCH sont configurés avec un même bloc de bits encodé PBCH.

2. Procédé selon la revendication 1, dans lequel la seconde région d'émission est en outre configurée sur la base d'au moins l'un parmi un signal de référence de cellule, CRS, un canal physique de contrôle de liaison descendante, PDCCH, un canal physique d'indicateur HARQ, PHICH, ou un canal physique d'indication de format de contrôle, PCFICH, émis dans la seconde sous-trame.

3. Procédé selon la revendication 1, comprenant en outre :

la génération de quatre blocs de bits d'encodage PBCH pour diffuser un bloc d'information maître, MIB, et

dans lequel les quatre blocs de bits d'encodage PBCH sont émis pendant quatre trames consécutives.

4. Procédé selon la revendication 1, dans lequel le second PBCH est diffusé de façon répétée au moins deux fois dans la seconde région d'émission.

5. Nœud B évolué, eNB, pour émettre un canal physique de diffusion, PBCH, dans un système d'accès sans fil prenant en charge une communication de type machine, MTC, l'eNB comprenant :

un émetteur (1050) ; et

un processeur (1030) pour supporter une émission du PBCH,

dans lequel le processeur est configuré pour contrôler l'émetteur pour diffuser un premier PBCH par l'intermédiaire d'une première région d'émission dans une première sous-trame qui est une sous-trame de départ d'une trame,

**caractérisé en ce que** :

le processeur est en outre configuré pour contrôler l'émetteur pour diffuser de façon répétée un second PBCH par l'intermédiaire d'une seconde région d'émission dans une seconde sous-trame,
dans lequel la première sous-trame est contiguë avec la seconde sous-trame,
dans lequel la seconde région d'émission est configurée sur la base d'un signal de référence d'information d'état de canal, CSI-RS, dans la seconde sous-trame,
dans lequel le premier PBCH est un PBCH hérité pour un équipement utilisateur, UE, normal et le second PBCH est un PBCH MTC pour un UE MTC,
dans lequel la première région d'émission est configurée par 72 sous-porteuses à une fréquence centrale d'un second créneau de la première sous-trame dans chaque trame, et
dans lequel le PBCH hérité et le PBCH MTC sont configurés avec un même bloc de bits encodé PBCH.

6. Nœud B évolué selon la revendication 5, dans lequel la seconde région d'émission est en outre configurée sur la base d'au moins l'un parmi un signal de référence de cellule, CRS, un canal physique de contrôle de liaison descendante, PDCCH, un canal physique d'indicateur HARQ, PHICH, ou un canal physique d'indication de format de contrôle, PCFICH, émis dans la seconde sous-trame.

7. Nœud B évolué selon la revendication 5, dans lequel le processeur est en outre configuré pour générer quatre blocs de bits d'encodage PBCH pour diffuser un bloc d'information maître, MIB, et
dans lequel les quatre blocs de bits d'encodage PBCH sont émis pendant quatre trames consécutives.

8. Nœud B évolué selon la revendication 5, dans lequel le second PBCH est diffusé de façon répétée au moins deux fois dans la seconde région d'émission.

# FIG. 1

INITIAL CELL SEARCH

RECEIVE SYSTEM INFORMATION

RANDOM ACCESS

GENERAL DL/UL TX/RX
S18

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11  S12  S13  S14  S15  S16  S17

- DL/UL ACK/NACK
- CQI/PMI/RI REPORTING OF UE ON PUSCH AND PUCCH

## FIG. 2

ONE RADIO FRAME, $T_f = 307200 T_s = 10\text{ms}$

ONE SLOT $T_{slot} = 15360 T_s = 0.5\text{ms}$

| #0 | #1 | #2 | ... | #18 | #19 |
|----|----|----|-----|-----|-----|

ONE SUBFRAME

(a)

ONE RADIO FRAME, $T_f = 307200 T_s = 10\text{ms}$

ONE HALF FRAME, $153600 T_s = 5\text{ms}$

ONE SLOT $T_{slot} = 15360 T_s$

$30720 T_s$

| SUBFRAME #0 | | | | SUBFRAME #2 | SUBFRAME #3 | SUBFRAME #4 | SUBFRAME #5 | | | | SUBFRAME #7 | SUBFRAME #8 | SUBFRAME #9 |
|---|---|---|---|---|---|---|---|---|---|---|---|---|---|

One subframe, $30720 T_s$

DwPTS  GP  UpPTS

DwPTS  GP  UpPTS

(b)

EP 3 062 542 B1

# FIG. 3

# FIG. 4

CONTROL REGION

DATA REGION

RB PAIR

FIRST SLOT  SECOND SLOT

FREQUENCY

SUBFRAME

TIME

# FIG. 5

CONTROL REGION          DATA REGION

FIRST SLOT              SECOND SLOT

ONE SUBFRAME

FREQUENCY

TIME

# FIG. 6

# FIG. 7

```
┌─────────────────────────────┐
│ ACQUIRE SYNCHRONIZATION      │  ～S710
│ CHANNEL SIGNAL (PSS/SSS)     │
└─────────────────────────────┘
              │
              ▼
┌─────────────────────────────┐
│ ACQUIRE PBCH SIGNAL (MIB)    │  ～S720
└─────────────────────────────┘
              │
              ▼
┌─────────────────────────────┐
│      ACQUIRE SIBx            │  ～S730
└─────────────────────────────┘
              │
              ▼
┌─────────────────────────────┐
│  PERFORM RACH PROCEDURE      │  ～S740
└─────────────────────────────┘
```

# FIG. 8

Logical channel  BCCH

Master Information Block

Transport channel  BCH

Transport block

CRC attachment

Channel coding

Rate matching

PBCH  Physical channel

Scrambling

Modulation

Layer mapping and precoding

Mapping to REs

System Bandwidth

PBCH

72 subcarriers

DC (NULL)

Symbol : 5th 6th 0th 1st 2nd 3rd

SSC    PSC

10msec    10msec    10msec    10msec

subframe

EP 3 062 542 B1

# FIG. 9

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013250878 A